Europäisches Patentamt

(19) European Patent Office (11) Numéro de publication: **0 136 202**

Office européen des brevets **B1**

# (12) FASCICULE DE BREVET EUROPÉEN

(45) Date de publication du fascicule du brevet: (51) Int. Cl.⁴: **B 01 D 35/12,** B 01 D 29/34
15.10.86

(21) Numéro de dépôt: **84401581.8**

(22) Date de dépôt: **27.07.84**

(54) Filtre muni d'un dispositif de décolmatage.

(30) Priorité: **06.06.83 FR 8313043** (73) Titulaire: **GEORGES MOATTI, Société Anonyme, 125, Avenue Pierre Curie, F-78210 Saint- Cyr- L'Ecole (FR)**

(43) Date de publication de la demande:
**03.04.85 Bulletin 85/14** (72) Inventeur: **Christophe, Théophile, Jean, 9, rue Mozart, F-78330 Fontenay Le Fleury (FR)**
Inventeur: **Moatti, Jean- Claude, Prosper, 13, rue Moreau Vauthier, F-92100 Boulogne (FR)**

(45) Mention de la délivrance du brevet:
**15.10.86 Bulletin 86/42**

(84) Etats contractants désignés: (74) Mandataire: **Hoisnard, Jean- Claude, Cabinet Beau de Lomenie 55, rue d'Amsterdam, F-75008 Paris (FR)**
**AT BE CH DE GB IT LI NL SE**

(56) Documents cité:
**EP-A-0 022 021**
**FR-A-2 120 940**
**FR-A-2 138 238**
**FR-A-2 143 694**
**FR-A-2 181 510**

**"FILTRATION" - G.JOATTI: -FRANCE- 1980**

LIBER, STOCKHOLM 1986

## Description

On connaît déjà des filtres, notamment à huile moteur ou à carburant, munis de dispositifs de décolmatage (voir par ex. la notice: "Filtration" - G. Moatti - France 1980).

Un tel filtre est constitué par un empilement de plusieurs éléments distincts de filtre assemblés les uns aux autres de manière à former un fourreau annulaire comportant au moins une face cylindrique, chaque élément de filtrer étant constitué, par plusieurs secteurs isolés les uns des autres, cependant que, d'une part, chaque élément de filtre est muni sur ses periphéries radiales externe et interne d'orifices de communication de chacun de ses secteurs avec lesdites périphéries, d'autre part, un distributeur de sectionnement est monté rotatif coaxialement à l'axe de ladite au moins une face cylindrique et comporte une chambre de sectionnement susceptible d'isoler un premier secteur d'un quelconque élément de filtre des autres secteurs dudit élément, en communiquant uniquement, à ce moment déterminé, avec ledit premier secteur au moyen d'un passage ménagé dans le distributeur et de l'orifice de communication dudit premier secteur.

Dans ce filtre, le dispositif de décolmatage est constitué par la combinaison de la disposition des orifices de communication des éléments de filtre avec le passage du distributeur, qui permet aux tamis de filtration des premiers secteurs d'être traversés, à contre courant, par le fluide propre déjà filtré par les autres secteurs, et, ainsi d'étre débarassés des impuretés qui s'y étaient préalablement déposées.

Le distributeur, entraîné en rotation, isole donc à chaque rotation au moins un secteur de chaque élément de filtre, et parfois davantage. Or, il faut observer qu'un secteur ainsi isolé est un secteur qui fonctionne pour se décolmater, et qui, par conséquent, ne participe pas à la filtration principale du produit à épurer.

L'invention, dans un filtre tel que précédemment décrit, et en conservant un principe de décolmatage analogue, entend adapter celui-ci pour réduire le nombre de secteurs travaillant, à un moment donné, en décolmatage, et pour, en conséquence, augmenter corrélativement le nombre de secteurs participant à la filtration principale, et, par ce moyen, augmenter l'efficacité globale du filtre.

A cet effet, selon l'invention, la forme dudit passage et la disposition des orifices de communication susceptibles d'être situés en regard sont telles que les premiers secteurs de seulement une partie de la totalité des éléments de filtre sont, dans une position relative déterminée du distributeur par rapport à l'empilement des éléments de filtre, en communication avec ladite chambre de sectionnement.

Les trois variantes de réalisation suivantes sont avantageuses, l'une ou l'autre d'entre elles étant de préférence adoptées:

- le passage du distributeur est constitué par une rainure hélicoïdale, cependant que les orifices de communication des premiers secteurs des éléments de filtre successifs sont alignés le long d'une génératrice de la face cylindrique du fourreau disposée en regard du distributeur;

- le passage du distributeur est constitué par une rainure droite s' étendant parallèlement à une génératrice de ladite face cylindrique du fourreau disposée en regard du distributeur, cependant que lesdits orifices de communication des premiers secteurs sont répartis en groupes distincts, les orifices de chaque groupe étant alignés le long d'une même génératrice de la face cylindrique du fourreau, et, les plans diamétraux contenant les génératrices d'alignement des orifices des divers groupes étant angulairement décalés les uns par rapport aux autres de manière à ne permettre la communication, à un moment déterminé, que des orifices d'un seul groupe d'orifices avec ledit passage du distributeur;

- le passage du distributeur est constitué par plusieurs rainures droites, distinctes les unes des autres, s'étendant parallèlement à une génératrice de ladite face cylindrique du fourreau disposée en regard du distributeur, chacune le long d'une partie seulement de la hauteur de l'empilement des éléments de filtre, cependant que, d'une part, les plans diamétraux contenant les rainures sont angulairement décalés les uns par rapport aux autres, d'autre part, les orifices de communication des premiers secteurs des éléments de filtres successifs sont alignés le long d'une génératrice de ladite face cylindrique du fourreau, de manière qu'à un moment déterminé une seule desdites rainures soit en communication avec seulement certains desdits orifices.

L'avantage principal des filtres conformes à l'invention est de neutraliser pour la phase de décolmatage, un nombre de secteurs d' éléments de filtre sensiblement inférieur à ce qui était nécessaire auparavant. Autrement dit, en adoptant les dispositions de l'invention, on peut réaliser dans un encombrement déterminé un filtre ayant un meilleur rendement qu'auparavant, ou encore capable de traiter un volume de fluide à filtrer supérieur au volume traité par les filtres antérieurs.

Il convient d'observer, par ailleurs, que cette augmentation du rendement n'a pas été obtenue au détriment de la qualité de la filtration, car chaque élément de filtre est aussi bien décolmaté qu'antérieurement et conserve donc en permanence son aptitude à bien filtrer. La première économie n'a été réalisée qu'en affectant un volume de fluide de décolmatage moindre pour décolmater un nombre de secteurs d'éléments de filtre, moindre également.

Si on tient compte, en outre, du fait que le fluide de décolmatage est généralement prélevé sur le fluide déjà filtré, on note l'obtention d'une deuxième économie, consistant à ne prélever qu'une quantité réduite de fluide déjà filtré aux fins de décolmatage.

L'invention sera mieux comprise, et des caractéristiques secondaires et leurs avantages apparaîtront au cours de la description de réalisations donnée ci-dessous à titre d'exemple.

Il est entendu que la description et les dessins ne sont donnés qu'à titre indicatif et non limitatif.

Il sera fait référence aux dessins annexés, dans lesquels:

- la figure 1 est une coupe axiale d'un filtre conforme à l'invention;
- la figure 2 est une coupe suivant II-II de la figure 1;
- la figure 3 est une vue développée des surfaces cylindriques du distributeur et de l'empilement des éléments de filtre en regard;
- la figure 4 est une coupe partielle d'un détail du distributeur des figures 1 et 2;
- la figure 5 est une vue perspective du distributeur des figures 1 et 2;
- la figure 6 est une vue développée des surfaces cylindriques en regard du distributeur et de l'empilement des éléments de filtre d'une deuxième réalisation conforme à l'invention;
- la figure 7 est une coupe partielle d'un détail du distributeur de la réalisation de la figure 6;
- la figure 8 est une vue développée des surfaces cylindriques du distributeur et de l'empilement des éléments de filtre d'une troisième réalisation conforme à l'invention; et,
- la figure 9 est une coupe partielle d'un détail du distributeur de la réalisation de la figure 8.

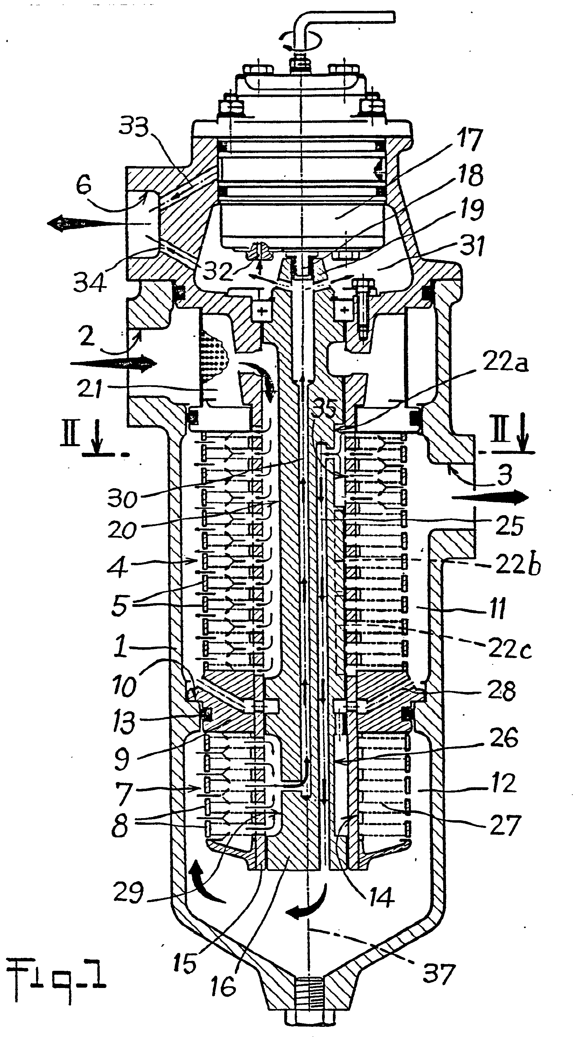

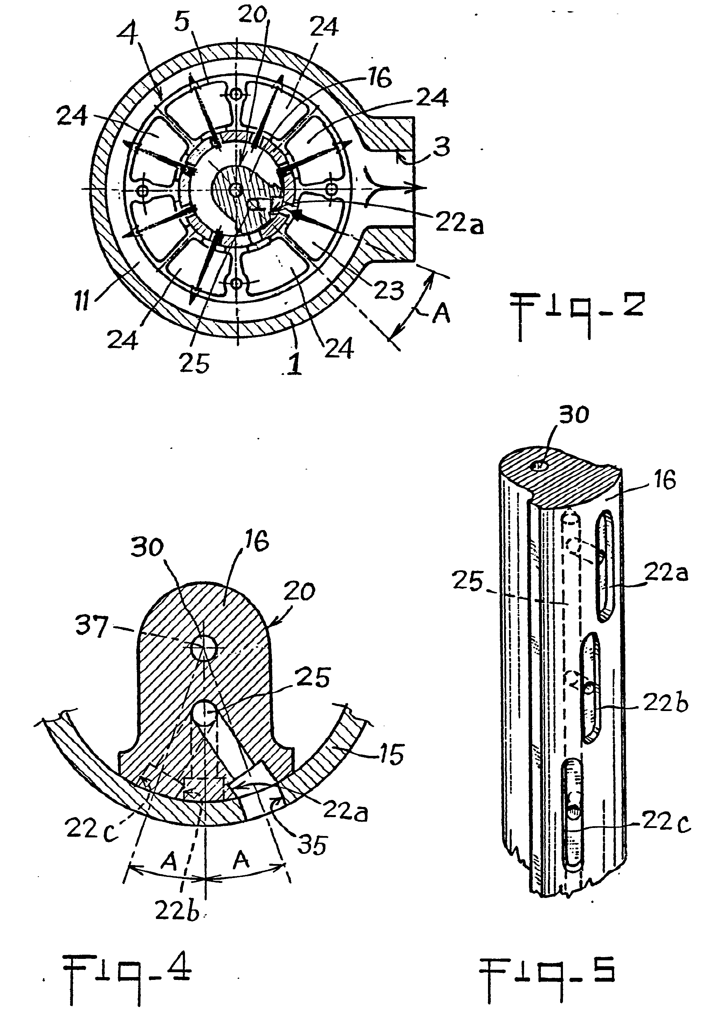

Le filtre des figures 1 et 2 comporte:

- un corps de filtre 1, muni d'un raccord d'admission 2 du fluide devant être filtré, d'un raccord d'évacuation 3 du fluide filtré par un empilement principal 4 d'éléments de filtration 5, et d'un raccord d'évacuation 6 du fluide de décolmatage des éléments de filtration 5, après filtration de ce fluide de décolmatage par un empilement secondaire 7 d'éléments de filtration 8,
- lesdits empilements principal 4 et secondaire 7, séparés par une pièce intermédiaire 9, qui est en appui sur un épaulement 10, dont est muni le corps 1, et qui ménage à l'intérieur dudit corps deux chambres principale 11 et secondaire 12 séparées avec étanchéité (13), la chambre principale communiquant avec le raccord d'évacuation 3,
- un alésage 14, commun aux deux empilements 4 et 7, auquel est ajustée une bague intérieure 15, à l'intérieur de laquelle un distributeur rotatif 16 est monté,
- un moteur hydraulique 17, d'entraînement pas à pas du distributeur 16, monté sur le corps 1 et attelé par une tête d'entrainement 18 à une extrémité 19 du distributeur 16,
- une gorge periphérique 20, ménagée dans le distributeur 16, qui est en communication avec la chambre d'admission 21 du fluide devant être filtré, elle-même étant en communication avec le raccord d'admission 2,
- une rainure triple 22a, 22b, 22c qui est ménagée dans le distributeur 16 et permet d'isoler un secteur angulaire 23 de quelques uns seulement (pas tous, comme cela sera expliqué ciaprès) des éléments de filtration 5 de l'empilement principal 4 des autres secteurs angulaires 24 des mêmes éléments de filtration 5,
- un conduit 25, interne au distributeur 16, avec lequel communique chaque rainure élémentaire 22a, 22b, 22c, et qui débouche dans la chambre secondaire 12,
- une rainure 26, ménagée dans le distributeur 16 et communiquant, d'une part, avec seulement un secteur angulaire 27 de chaque élément de filtration 8 de l'empilement secondaire 7, d'autre part, avec la chambre principale 11 par un conduit 28 ménagé dans la pièce intermédiaire 9,
- une gorge périphérique 29, ménagée dans le distributeur 16, qui communique, par un conduit 30 interne au distributeur 16 avec une chambre supérieure 31 ménagée dans le corps 1,
- des conduits d'alimentation 32 du moteur 17, communiquant avec la chambre supérieure 31,
- le conduit d' échappement 33 du moteur 17, communiquant avec le raccord d' évacuation 6,
- un conduit de liaison calibré (ayant une perte de charge déterminée) 34 reliant la chambre supérieure 31 au raccord d'évacuation 6.

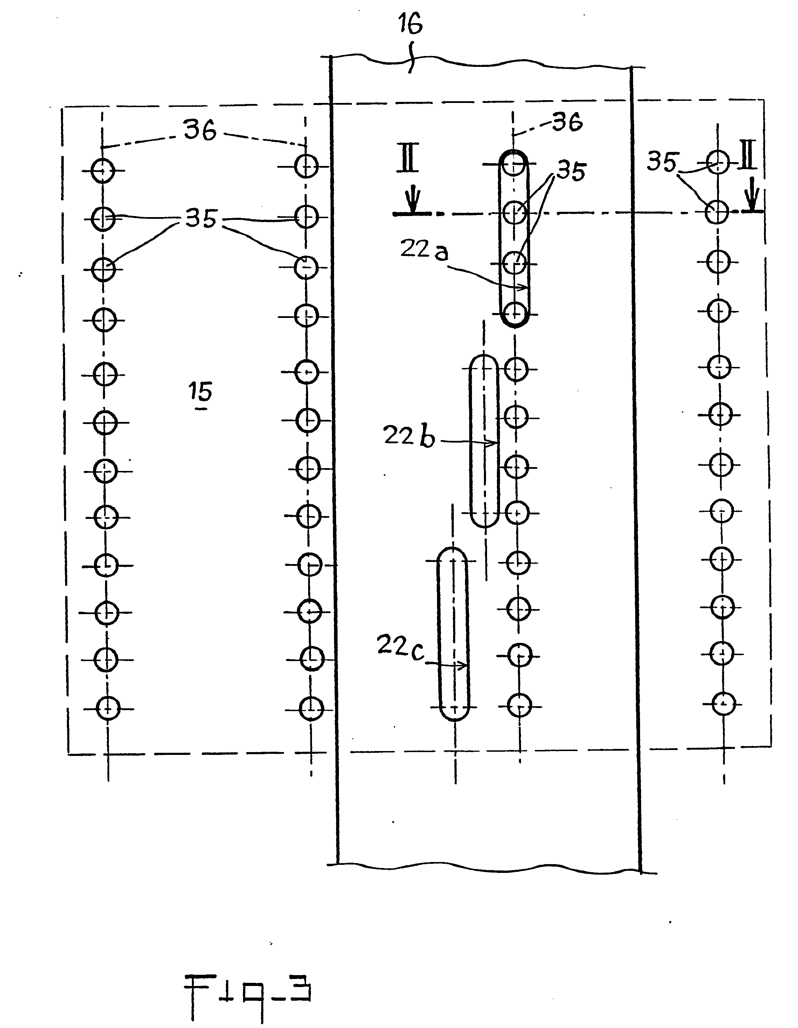

De manière classique, la bague 15, dont on voit une vue développée sur la figure 3, superposée à une vue de la face du distributeur 16 disposée en regard, comporte des trous traversant 35, qui dans la réalisation des figures 1 à 5 sont alignés sur des génératrices 36 de la bague 1 5 et correspondent aux orifices de la périphérie interne de l'empilement principal 4. Cet empilement 4 comporte également des orifices ménagés sur sa périphérie externe, ces orifices des périphéries interne et externe étant separes par les tamis des éléments filtrants.

La structure de l'empilement secondaire 7 e st analogue, avec orifices sur les périphéries interne et externe séparés par les tamis de filtration.

De manière connue, le fluide devant être filtré, admis dans la chambre d'admission 21, parvient dans la gorge 20 du distributeur, passe à travers les orifices de la périphérie interne des secteurs 24 des éléments de filtration 5 qui sont en regard de la gorge 20, puis à travers les trous correspondant 35 de la bague 15, traversent les tamis, puis les orifices de la périphérie externe des mêmes secteurs, et ressort filtré dans la chambre principale 11, pour ensuite être évacué à travers le raccord d'évacuation 3.

Cependant, une partie du fluide filtré contenu dans la chambre principale 11 traverse, en sens inverse du précédent, de la périphérie externe vers la périphérie interne de l'empilement 4 ceux des secteurs 23 des éléments de filtration 5 qui sont disposés en regard de l'une des rainures 22a, 22b, 22c (en fait, la rainure 22a dans la configuration de la figure 3). Cette faible partie de fluide filtré permet de dégager des tamis des dits secteurs 23 les impuretés qui s'y étaient préalablement deposées et ainsi, en nettoyant ces tamis, de les rendre de nouveau aptes è une filtration efficace. Cette partie du fluide, qui traverse les tamis des secteurs 23 est collectée par la rainure disposée en regard de ces secteurs (22a de la figure 3) et dirigé, par le conduit 25 vers la chambre secondaire 12.

Le fluide chargé d'impuretés, contenu dans la chambre secondaire 12 traverse, de la périphérie externe vers la périphérie interne des secteurs des éléments de filtration de l'empilement, qui sont en regard de la gorge 29 du distributeur 16, et, filtré par les tamis desdits secteurs, de la gorge 29 est dirigé par le conduit 30, la chambre 31 et le conduit 34, vers le raccord d'évacuation 6 pour une nouvelle utilisation. A noter que, de manière également connue, une partie de ce fluide filtré contenu dans la chambre supérieure 31 est utilisée en tant que fluide d'alimentation du moteur 17 (conduits 32).

La nouveauté réside dans le fait que pendant l'opération de "décolmatage" des tamis des éléments de filtration 5 de l'empilement principal 4, les secteurs 23 d'une seule colonne sont lavés de leurs impuretés, et en fait, parmi les secteurs 23 d'une colonne, seuls sont traversés par le fluide de "lavage" les secteurs des éléments dont les trous 35 sont en communication avec une rainure 22a, 22b, 22c. Or, comme cela est visible sur la figure 4, chacune de ses rainures est droite (parallèle à une génératrice de la bague 15 disposée en regard), parallèle aux génératrices 36 d'alignement des trous 35 d'une colonne de secteurs 23 ou 24, et est décalée angulairement, par rapport à l'axe 37 de rotation du distributeur 16, d'un angle A par rapport à la rainure adjacente, de manière qu'avec un distributeur 16 à trois rainures distinctes 22a, 22b, 22c, comme celui des figures 1 à 5, seulement un tiers des trous 35 sont disposés en regard desdites rainures, pendant l'opération de "lavage/décolmatage". Ainsi, seulement un tiers des secteurs 23 d'une colonne est traversé par le fluide de lavage à un moment donné. Bien entendu, à la prochaine rotation du distributeur, ce seront les secteurs 23 du tiers suivant des éléments de filtration qui seront alors en communication avec la rainure 22b. Puis, après la rainure 22b, ce sera la rainure 22c qui, à la suite d'une nouvelle rotation du distributeur 16, permettra le décolmatage des secteurs 23 correspondant. Il n'y a qu'un tiers seulement des secteurs d'une seule colonne qui, à un moment donné, peut être décolmaté.

Bien entendu, avec la nouvelle disposition préconisée, le débit de fluide de décolmatage est, pour la même efficacité de décolmatage, le tiers du débit qui était nécessaire auparavant, lorsque le décolmatage était celui de tous les secteurs d'une même colonne d'éléments de filtration. On ne consomme donc plus que le tiers du débit antérieurement consommé. Or, ce débit étant prélevé dans la chambre principale 11, doit être déduit du débit de fluide filtré effectivement utilisable, pouvant être évacué à travers le raccord 3. Ceci conduit à constater que le fluide utilisé pour le décolmatage constitue, en quelque sorte, une perte de fluide filtré. Dans le cas de la réalisation nouvelle, cette perte a été divisée par trois, ce qui est considérable.

En outre, à un instant déterminé, tous les secteurs de tous les éléments de filtration 5 de l'empilement principal 4 sont actifs pour épurer le fluide à filtrer, sauf les quelques secteurs 23 qui sont en phase de décolmatage. L'invention, en réduisant le nombre des secteurs 23 en phase de décolmatage, laisse disponibles pour la filtration tous les autres secteurs. Ainsi, de ce deuxième point de vue, un filtre complet d'un encombrement donné peut, selon la nouvelle conception préconisée, traiter un débit de fluide devant être épuré supérieur au débit que pouvait traiter un filtre complet classique. Sur ce point, il y a donc également gain d'efficacité.

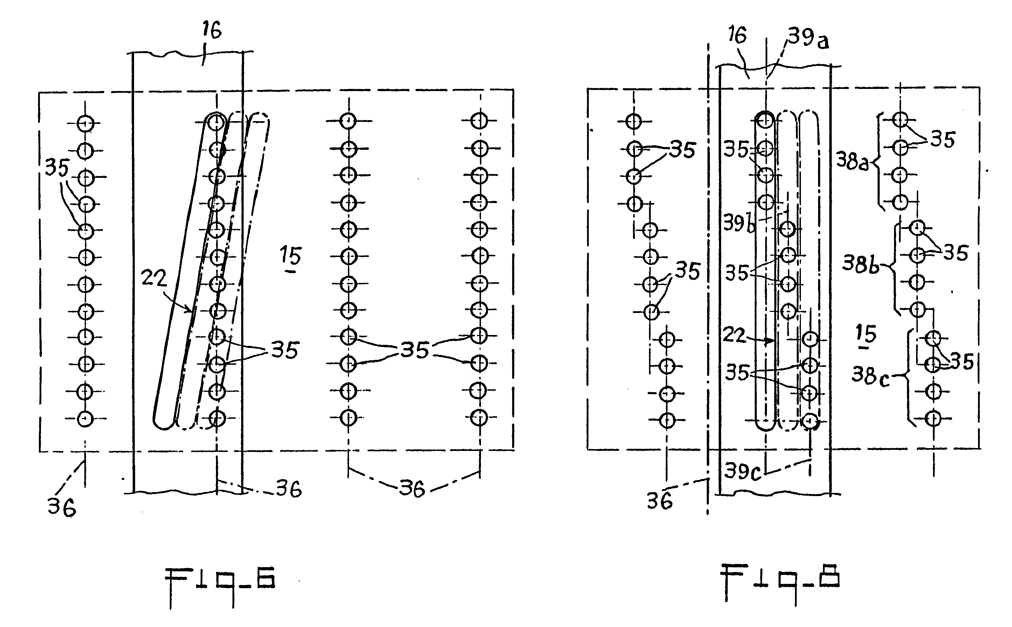

Le même principe du décolmatage simultané de seulement quelques secteurs d'une colonne de secteurs d'éléments de filtration peut être appliqué à d'autres réalisations que celles des figures 1 à 5. Deux telles autres réalisations sont représentées sur les figures 6 et 7, d'une part, 8 et 9, d'autre part. Il s'agit, dans chaque réalisation, de réaliser un décalage entre les trous 35 et la rainure du distributeur 16.

Dans la réalisation des figures 6 et 7, ce décalage est obtenu par la forme hélicoïdale qui a été donnée à la rainure 22 du distributeur, ladite rainure ne recouvrant au plus qu'une partie des trous 35 d'une colonne, lesdits trous étant alignés sur une génératrice 36.

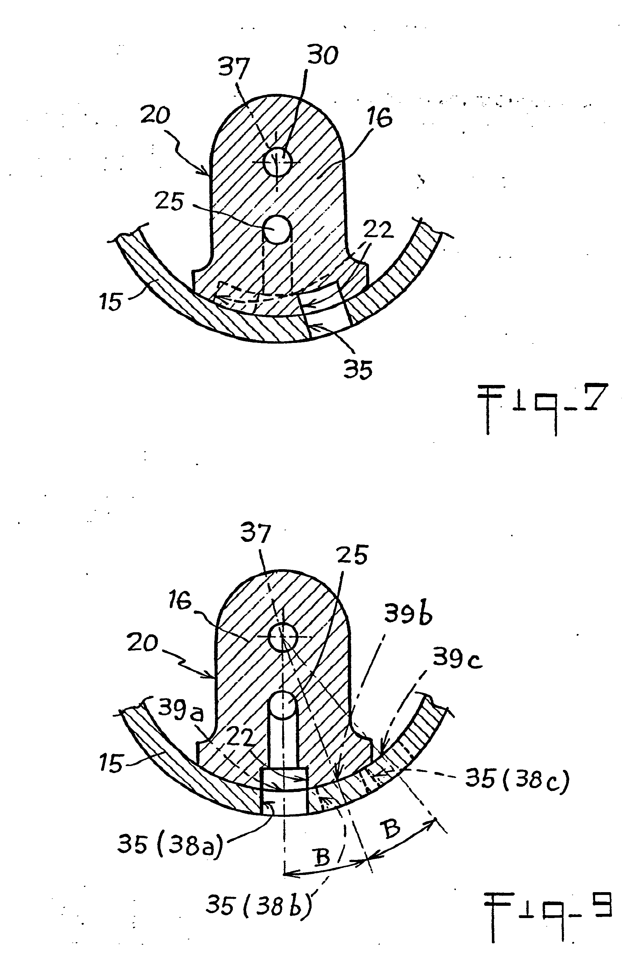

Dans la réalisation des figures 8 et 9, le décalage est obtenu par la combinaison de la forme droite de la rainure 22 (parallèle aux génératrices 36) et par le décalage angulaire B des génératrices d'alignement (39a, 39b, 39c) des trous 35 d'une colonne qui, cette fois, sont répartis en trois groupes distincts. A un moment donné, la rainure 22 n'est en communication qu'avec les trous 35 d'un seul des trois groupes 38a, 38b, 38c d'une colonne de secteurs superposés.

Dans chacune de ces deux réalisations, on retrouve évidemment le même fonctionnement et les mêmes avantages que ce qui a été exposé à propos de la réalisation des figures 1 à 5.

**Revendications**

1. Filtre constitué par un empilement (4) de plusieurs éléments distincts de filtre (5) assemblés les uns aux autres de manière à former un fourreau annulaire (15-4) comportant au moins une face cylindrique (15), chaque élément de filtre étant constitué par plusieurs secteurs (24-23) isolés les uns des autres, cependant que, d'une part, chaque élément de filtre est muni sur ses périphéries radiales externe et interne d'orifices de communication de chacun de ses secteurs avec lesdites périphéries, d'autre part, un distributeur de sectionnement (16) est monté rotatif (37) coaxialement à l'axe de ladite au moins une face cylindrique et comporte une chambre de sectionnement (22; 22a, 22b, 22c) susceptible d'isoler un premier secteur (23) d'un quelconque élément de filtre (5) des autres secteurs (24) dudit élément, en communiquant uniquement, à ce moment déterminé, avec ledit premier secteur (23) au moyen d'un passage (22; 22a, 22b, 22c) ménagé dans le distributeur (16) et de l'orifice de communication (35) dudit premier secteur (23), caractérisé en ce que la forme dudit passage (22; 22a, 22b, 22c) et la disposition des orifices de communication (35) susceptibles d'être situés en regard sont telles que les premiers secteurs (23) de seulement une partie de la totalité des éléments de filtre (5) sont, dans une position relative déterminée du distributeur par rapport à l'empilement des éléments de filtre, en communication avec ladite chambre de sectionnement.

2. Filtre selon la revendication 1, caractérisé en ce que le passage du distributeur est constitué par une rainure hélicoïdale (22, figures 6 et 7), cependant que les orifices de communication (35) des premiers secteurs (23) des éléments de filtre successifs (5) sont alignés le long d'une génératrice (36) de la face cylindrique du fourreau disposée en regard du distributeur.

3. Filtre selon la revendication 1, caractérisé en ce que le passage du distributeur est constitué par une rainure droite (22, figures 8 et 9) s'étendant parallèlement à une génératrice (36) de ladite face cylindrique du fourreau disposée en regard du distributeur, cependant que lesdits orifices de communication (35) des premiers secteurs (23) sont répartis en groupes distincts (38a, 38b, 38c), les orifices (35) de chaque groupe étant alignés le long d'une même génératrice (39a, 39b, 39c) de la face cylindrique du fourreau, et, les plans diamétraux contenant les génératrices d'alignement des orifices des divers groupes étant angulairement décalés (B) les uns par rapport aux autres de manière à ne permettre la communication, à un moment déterminé, que des orifices (35) d'un seul groupe d'orifices avec ledit passage (22) du distributeur.

4. Filtre selon la revendication 1, caractérisé en ce que le passage du distributeur est constitué par plusieurs rainures droites (22a, 22b, 22c, figures 1 à 5) distinctes les unes des autres, s'étendant parallèlement à une génératrice (36) de ladite face cylindrique du fourreau disposée en regard du distributeur, chacune le long d'une partie seulement de la hauteur de l'empilement des éléments de filtre, cependant que, d'une part, les plans diamétraux contenant les rainures sont angulairement décalés (A) les uns par rapport aux autres, d'autre part, les orifices de communication (35) des premiers secteurs (23) des éléments de filtres successifs (5) sont alignés le long d'une génératrice (36) de ladite face cylindrique du fourreau, de manière qu' à un moment déterminé une seule (22a ou 22b ou 22c) desdites rainures soit en communication avec seulement certains desdits orifices (35).

**Patentansprüche**

1. Filter, bestehend aus einem Stapel (4) von mehreren separaten Filterelementen (5), die derart aneinandergereiht sind, daß sie eine ringförmige Büchse (15-4) mit mindestens einer Zylinderfläche (15) bilden, wobei jedes Filterelement durch mehrere voneinander getrennte Sektoren (24-23) gebildet ist und wobei einerseits jedes Filterelement an seinem Außenund Innenumfang mit Öffnungen zur Verbindung jedes seiner Sektoren mit den besagten Umfängen versehen ist und anderseits ein Sektorenverteiler (16) koaxial zur Achse der mindestens einen Zylinderfläche drehbar (37) angeordnet ist und eine Unterteilungskammer (22; 22a, 22b, 22c) zum Abtrennen eines ersten Sektors (23) irgendeines Filterelements (5) von den anderen Sektoren (24) des Elements umfaßt, welche zu diesem bestimmten Zeitpunkt nur mit dem ersten Sektor (23) über einen im Verteiler (16) vorgesehenen Durchlaß (22; 22a, 22b, 22c) und über die Verbindungsöffnung (35) des ersten Sektors (23) kommuniziert, dadurch gekennzeichnet, daß die Form des Durchlasses (22; 22a, 22b, 22c) und die Anordnung der Verbindungsöffnungen (35), die in eine gegenüberliegende Lage bringbar sind, derart ist, daß sich die ersten Sektoren (23) von nur einem Teil der Gesamtheit der Filterelemente (5) in einer vom Verteiler festgelegten Relativposition in bezug auf den Stapel von Filterelementen in Verbindung mit der Unterteilungskammer befinden.

2. Filter nach Anspruch 1, dadurch gekennzeichnet, daß der Durchlaß des Verteilers durch eine Spiralnut (22, Fig. 6 und 7) gebildet ist, wobei die Verbindungsöffnungen (35) der ersten Sektoren (23) der aufeinanderfolgenden Filterelemente (5) entlang einer Erzeugenden (36) der Zylinderfläche der Hülse, die sich gegenüber dem Verteiler befindet, ausgerichtet sind.

3. Filter nach Anspruch 1, dadurch gekennzeichnet, daß der Durchlaß des Verteilers durch eine gerade Nut (22, Fig. 8 und 9) gebildet ist, die parallel zu einer Erzeugenden (36) der Zylinderfläche der Hülse, die sich gegenüber dem Verteiler befindet, verläuft, wobei die Verbindungsöffnungen (35) der ersten Sektoren (23) in separaten Gruppen (38a, 38b, 38c) verteilt sind, wobei die Öffnungen (35) jeder Gruppe entlang ein- und derselben Erzeugenden (39a, 39b, 39c) der Zylinderfläche der Hülse ausgerichtet sind und die Diametralebenen, die die Erzeugenden zur Ausrichtung der öffnungen der verschiedenen Gruppen enthalten, derart winkelförmig zueinander versetzt sind (B), daß sie zu einem bestimmten Zeitpunkt nur die Verbindung der Öffnungen (35) einer einzigen Gruppe von Öffnungen mit dem Durchlaß (22) des Verteilers gestatten.

4. Filter nach Anspruch 1, dadurch gekennzeichnet, daß der Durchlaß des Verteilers durch mehrere gerade Nuten (22a, 22b, 22c, Fig. 1 bis 5), die voneinander getrennt sind und parallel zu einer Erzeugenden (36) der Zylinderfläche der Hülse, die sich gegenüber dem Verteiler befindet, jeweils nur entlang eines Teils der Höhe des Stapels der Filterelemente, verlaufen, wobei einerseits die die Nuten enthaltenden Diametralebenen winkelförmig zueinander versetzt sind (A) und anderseits die Verbindungsöffnungen (35) der ersten Sektoren (23) der aufeinanderfolgenden Filterelemente (5) entlang einer Erzeugenden (36) der Zylinderfläche der Hülse derart ausgerichtet sind, daß zu einem bestimmten Zeitpunkt eine einzige (22a oder 22b oder 22c) der Nuten nur mit gewissen Öffnungen (35) in Verbindung steht.

**Claims**

1. A filter consisting of a stack (4) of several distinct filter elements (5) assembled together to form an annular sleeve (15-4) comprising at least one cylindrical side (15), each filter element consisting of several sections (24-23) isolated one from the other while, firstly, each filter element is provided on its external and internal radial circumferences with communication orifices allowing communication of each of its sections with the said circumferences and, secondly, a rotary shut-off valve (16) fitted to rotate (37) coaxially with the said cylindrical side and comprising a shut-off chamber (22; 22a, 22b and 22c) able to shut off a first section (23) of any filter element (5) from the other sections (24) of said element, and communicating only at any given moment with the said first section (23) by means of a port (22; 22a, 22b and 22c), cut in the valve (16) and of the communication orifice (35) of the said first section (23), characterized in that the shape of the said port (22; 22a, 22b and 22c) and the arrangement of the communication orifices (35) that are likely to be opposite it are such that the first sections (23) of only one part of the filter elements (5) are in communication with the said shut-off chamber in a given relative position of the valve in relation to the stack of filter elements.

2. A filter according to claim 1, characterized in that the valve port consists of a helical groove (22, figures 6 and 7), while the communication orifices (35) of the first sections (23) of the successive filter elements (5) are aligned along a generatrix (36) of the cylindrical side of the sleeve placed opposite the valve.

3. A filter according to claim 1, characterized in that the valve port consists of a straight groove (22, figures 8 and 9), extending parallel to a generatrix (36) of the said cylindrical side of the sleeve placed opposite the valve, while the said communication orifices (35) of the first sections (23) are divided into distinct groups (38a, 38b and 38c), the orifices (35) of each group being aligned along the same generatrix (39a, 39b and 39c) of the cylindrical side of the sleeve, and the diametrical planes containing the generatrices that align the orifices of the various groups are off-set angularly (B) in relation to each other so as to allow communication at any given moment between the communication orifices (35) of one group of orifices only with the said valve port (22).

4. A filter according to claim 1, characterized in that the valve port consists of several straight grooves (22a, 22b and 22c, figures 1 to 5) distinct from each other and extending parallel to a generatrix (36) of the said cylindrical side of the sleeve placed opposite the valve, each along only one part of the height of the stack of filter elements, while firstly, the diametrical planes containing the grooves are off-set angularly (A) from each other and, secondly, the communication orifices (35) of the first sections (23) of the successive filter elements (5) are aligned along a generatrix (36) of the said cylindrical side of the sleeve, so that at any given moment only one of the said grooves (22a or 22b or 22c) is in communication with only certain of the said communication orifices (35).

Fig.1

0 136 202

Fig-2

Fig-4

Fig-5

3

16

36

36

35

II

35

II

35

35

22 a

22 b

15

22 c

Fig 3

Fig-6

Fig-8

0 136 202

Fig_7

Fig_9